# EUROPEAN PATENT APPLICATION

(11) **EP 2 145 572 A1**
(43) Date of publication of application: **20.01.2010**
(21) Application number: 08158002.9
(22) Date of filing: 11.06.2008
(51) Int. Cl.: A47J 43/10

(54) **Rotary beater**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

The present invention provides a rotary beater, having lower segments to lift food ingredients, and upper segments to smash the food ingredients downward. The beater comprises at least one wire loop which is connected to a drive shaft, and comprises a first section, a second section and a third section. The first section comprises segments extending radially away from the drive shaft. The second section comprises upper segments and lower segments. The upper segments extend along the drive shaft, and are inclined at an angle (β) relative to the center line of the drive shaft. The lower segments extend downward along the drive shaft, and are arranged at an angle (γ) relative to the upper segments. The third section comprises segments extending radially towards the drive shaft, and lagging behind the segments at an angle in the direction of rotation.

## Description

### FIELD OF THE INVENTION

The present invention relates to a rotary beater adapted to be rotated by a drive shaft. The beater may be used in electrical household appliances. The beater can be used for beating, mixing, whipping or whisking material.

### BACKGROUND OF THE INVENTION

GB-977,761 provides a beater including at least one wire-shaped beater element, which starts from the drive shaft, extends further in the direction of the drive shaft, and finally, after two changes in its direction of extension, is led back to the drive shaft. The wire element can substantially be subdivided into three sections. The first section is a rectilinear portion, extending away from the drive shaft. The second section is also rectilinear and extends along the drive shaft. The third section is rectilinear and extends from the end of the second section towards the drive shaft. The end of the first section leads the end of the third section when the beater is rotated. The first, second and third section are made by first bending a metal wire into a plane rectangle. Thereupon, two opposite sides, which are to form second sections, are bend out of the original plane of the rectangle in opposite directions so that one half of the rectangle is in a plane inclined to the plane of the other half. Owing to the bending effect, the second sections have a definite angle with respect to the longitudinal axis of the drive shaft. Due to the inclined second sections, the beater of GB-977,761, in use, imparts a stroke effect to the material to be processed. At the same time, a relatively mild aerating action is effected.

Likewise, US-5,590,962 provides a beater comprising a wire element that consists of a subsequent first, second and third sections. US-5,590,962 aims to provide an improved beater to allow mixing of foods without the foods being spattered inadmissibly. In use, the first section, which is the section nearest the drive shaft, lags behind the third section. The second section is divided in an upper segment and a lower segment of about equal length. Due to the upper segment lagging behind the lower segment, when viewed in the direction of rotation of the beater, the foods are caught by the lower segments particularly intensively and moved or tossed upwardly. The upper segments extend in parallel to the central axis of the drive shaft. The foods in the lower segments are lifted upwardly and radially outwardly. In the upper segments the foods are moved only in a radially outward direction, i.e. horizontally, as these segments extend radially outward to a slight degree, but substantially parallel to the drive shaft. As a result, the ascending foods are accelerated horizontally, which avoids the spattering of food. Besides having upper segments parallel to the drive shaft, US-5,590,962 teaches to arrange the lower segments at an angle of at least 60 degrees or more relative to the drive shaft, for optimal volume increase of the food.

### OBJECT OF THE INVENTION

The present invention aims to improve upon a rotary beater such as to optimize the volume increase for whisking and whipping, providing a stronger aerating effect, and to reduce the time needed to process the material.

### SUMMARY OF THE INVENTION

The above stated object is achieved by a rotary beater adapted to be rotated in a predetermined direction of rotation by a drive motor, the beater comprising:
- a drive shaft that is adapted to be coupled to said drive motor and that has a center line about which the beater is rotated by said drive motor;
- at least one wire loop which is connected to the drive shaft, and comprises a first section, a second section and a third section,
- wherein the first section comprises segments extending radially away from the drive shaft;
- wherein the second section comprises upper segments and lower segments,
- wherein the upper segments extend along the drive shaft, and are inclined at an angle β relative to the center line of the drive shaft;
- wherein the lower segments extend downward along the drive shaft, and are arranged at an angle γ relative to the upper segments; and
- wherein the third section comprises segments extending radially towards the drive shaft, and lagging behind the segments of the first section at an angle E in the direction of rotation.

The special geometry of the beater of the present invention is responsible for a significant reduced application time and a significant raised volume increase of the food in comparison to other wire beaters. During rotation of the beater, the lower parts lift the food up and the upper parts smash the food downward. This procedure brings additional air into the processed food ingredients and thereby the volume is increased tremendously, in comparison to other already available wire beaters. Additionally, the time for processing food is reduced, due to the downward beating of the upper segments.

### BRIEF DESCRIPTION OF THE DRAWINGS

Additional details and advantages of the invention are elucidated below, referring to the enclosed drawings, wherein:
Fig. 1 shows a side view of a beater according to the present invention;
Fig. 2 shows a perspective view of the beater of Fig. 1;
Fig. 3 shows a bottom view of the beater of Fig. 1; and
Fig. 4 shows a further side view of the beater of Fig. 1.

### DETAILED DESCRIPTION OF EXAMPLES

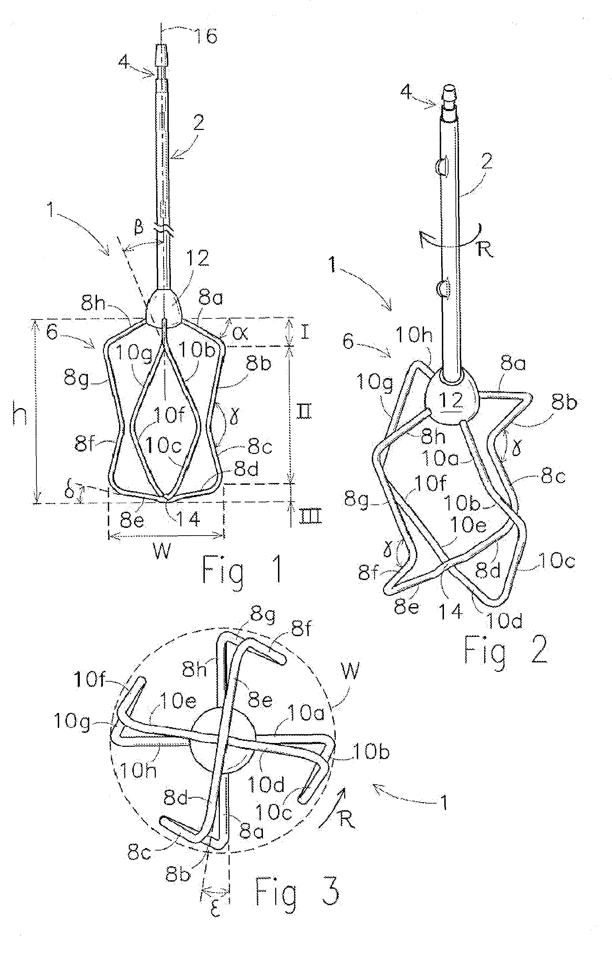

Figures 1, 2 and 3 show a beater of whisk 1 according to the present invention. The beater includes a rod 2, one end of which is provided with coupling 4 adapted to be inserted into a driving arrangement. The shaft may be provided with crimp noses for attaching the shaft to a mixer power unit (not shown). The driving arrangement may be hand- or motor-operated. The beater may be used with electrical kitchen machines, either hand-held or not. The kitchen machines may for instance be provided with one beater, or with two beaters rotating in opposite directions. The beater is intended for rotation in the direction of the arrow R, at rotational speeds in the range of 300 up to 2000 or 3000 rpm.

The other end of the rod 2 is provided with a whirling member 6. The whirling member 6 comprises one or more wire loops, for instance two wire loops 8, 10. Each wire loop has height h, and width W. The two wire loops are arranged perpendicular to each other, i.e. at an angle of about 90° (Fig. 3). The wire loops are fabricated by bending wire into a predetermined shape. The end sections of the wire loops 8, 10 are rigidly connected to the end of the rod 2 by way of hub 12. The wire loops intersect each other at the lower end of the beater 1 and consist of wire. The wire loops 8, 10 are connected to each other at the point 14 where they intersect.

Figures 1 and 2 show the shape of the wire loops 8, 10. The wire loops 8, 10 comprise a first section I, a second section II, and a third section III (Fig. 1).

The first section I comprises segments (8a, 8h; 10a, 10h) extending radially away from the drive shaft. The segments may incline downward with respect to the radius of the drive shaft at an angle α. In a practical embodiment, the angle α may be in the range of 10 to 40°, for instance about 30°.

The second section II comprises upper segments (8b, 8g; 10b, 10g) and lower segments (8c, 8f; 10c, 10f). The upper segments extend downward along the drive shaft. The upper segments (8b, 8g; 10b, 10g) are arranged in a plane that is inclined at an angle β relative to the center line 16 of the drive shaft 2. The lower segments extend downward along the drive shaft, and are arranged at an angle γ relative to the upper segments. The angle γ is arranged near the middle of the second section. I.e., the upper and lower segments have about the same length. As shown in Fig. 3, all parts of the upper and lower segments have about the same distance with respect to the drive shaft, indicated by a circle having a diameter equal to the width W.

Section II has a special geometry and is the connection between the top cross and the bottom cross, formed by section I and III. Section II has a bend in the middle, with an angle γ of about 130° (Fig. 1 and 2). The angle γ is a compromise for whisking and whipping and preferably is within the range of 120° to about 140°. Whisking is optimal at an angle γ of about 140°, whipping at an angle γ of about 120°.

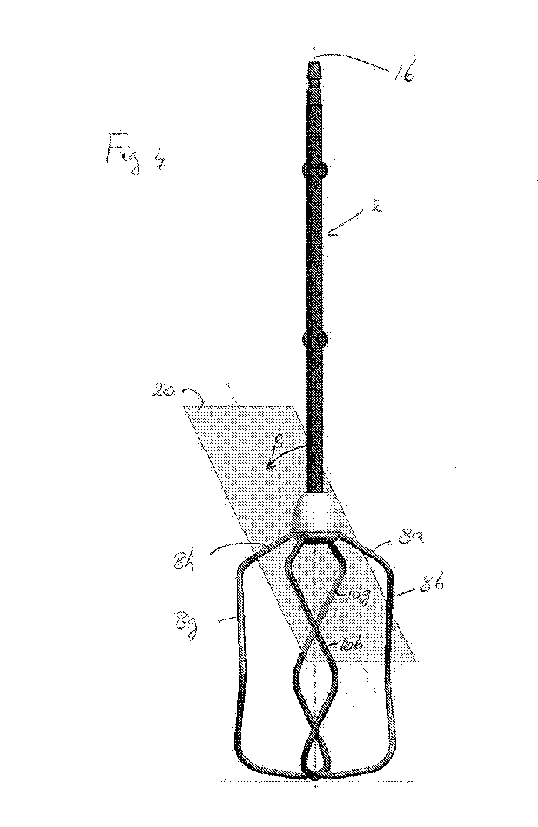

Section II connects Section I and III such that the maximum diameter of the loops (width W) is not exceeded, although all ends of the lower and upper segments of the second section are arranged at about substantially the same distance 0.5*W from the center line 16 (Fig. 3). The angle γ is positioned into the direction of rotation (Fig. 3). The upper segments are arranged in a plane that is inclined relative to the center line 16 at an angle β, thus beating down the food during rotation of the beater. Fig. 4 shows plane 20 in which upper segment 10b is arranged. Planes 20 is inclined relative to the center line 16 at an angle β.

In a practical embodiment, the angle β is in the range of 15 to 35°, having an optimum of about 25°. Likewise, the lower segments are arranged in a plane that is inclined relative to the center line 16 at an angle in the range of 15 to 35°, or preferably 20 to 30°, having an optimum at about 22 to 25°.

The third section comprises segments (8d, 8e; 10d, 10e) extending radially towards the drive shaft. The segments may be inclined downwards relative to the central line 16 at an angle δ. In a practical embodiment, the angle δ may be in the range of 0 to 30°, for instance about 10°. Reducing the angle δ will enable the beater to reach more of the processed material during each rotation, thus reducing the processing time. On the other hand, increasing the angle δ improves the handling of the beater. An optimum was found at an angle δ of about 10°.

The segments (8d, 8e; 10d, 10e) lag behind the segments (8a, 8h; 10a, 10h) at an angle E in the direction of rotation R. In a practical embodiment, the angle E may be in the range of 5 to 30°, for instance about 15°.

The beater of the present invention is an improvement compared to existing rotary beaters. The advantage of the above described beater is its geometrical shape which provides a significantly reduced application time and a significantly raised volume increase in comparison to straight wired beaters (such as the beater of GB-977,761). The beater of the present invention is a cheap and attractive base function for a hand mixer.

The special geometry of the beater is responsible for a significantly reduced application time and a significant raised volume increase in comparison to other wire beaters. During rotation of the beater, the lower segments of sections II lift the food ingredients, whereas the upper segments of sections II smash the food ingredients downward. Through this procedure air is introduced in the ingredients and the volume is increased in comparison to other already available wire beaters, wherein the upper segments of section II are parallel to the drive shaft (such as the beater of US-5,590,962). According to tests comparing the beater of the present invention with the beater of US-5,590,962, the volume increase of the food using the beater of the present invention exceeds the food volume increase using the beater of US-5,590,962 at the same rotational speeds. Contrary to known wire beaters, the beater of the present invention provides improved volume increase both for whisking and for whipping. Comparative tests for instance included whisking egg white, and whipping cream. In addition, the wire beater of the present invention beats the food product downward, thus reducing the time that is needed for processing the food.

The present invention is not limited to the above described embodiments thereof. Many modifications of the embodiments are imaginable within the scope of the appended claims.

## Claims

1. A rotary beater (1) adapted to be rotated in a predetermined direction of rotation (R) by a drive motor, the beater comprising:
- a drive shaft (2) that is adapted to be coupled to said drive motor and that has a center line (16) about which the beater is rotated by said drive motor;
- at least one wire loop (8, 10) which is connected to the drive shaft, and comprises a first section (I), a second section (II) and a third section (III),
- wherein the first section (I) comprises segments (8a, 8h; 10a, 10h) extending radially away from the drive shaft;
- wherein the second section (II) comprises upper segments (8b, 8g; 10b, 10g) and lower segments (8c, 8f; 10c, 10f),
- wherein the upper segments extend along the drive shaft, and are inclined at an angle (β) relative to the center line (16) of the drive shaft (2);
- wherein the lower segments extend downward along the drive shaft, and are arranged at an angle (γ) relative to the upper segments; and
- wherein the third section (III) comprises segments (8d, 8e; 10d, 10e) extending radially towards the drive shaft, and lagging behind the segments (8a, 8h; 10a, 10h) at an angle (ε) in the direction of rotation (R).

2. The rotary beater of claim 1, wherein the angle (γ) is in the range of about 120° to about 140°.

3. The rotary beater of claim 1, wherein the angle (γ) is about 130°.

4. The rotary beater of any of the preceding claims, wherein all ends of the lower and upper segments of the second section are arranged at about substantially the same distance (0.5*W) from the center line (16).

5. The rotary beater of any of the previous claims, wherein the angle (ε) is in the range of about 5° to about 30°.

6. The rotary beater of any of the previous claims, wherein the segments (8a, 8h; 10a, 10h) incline downward with respect to the radius of the drive shaft at an angle (α) in the range of 10 to 40°.

7. The rotary beater of any of the previous claims, wherein the angle (β) is in the range of 15 to 35°.

8. The rotary beater of claim 7, wherein the angle is (β) about 25°.

9. The rotary beater of any of the previous claims, wherein the angle between the lower segments (8c, 8f; 10c, 10f) and the center line (16) is in the range of 15° to 35°.

10. The rotary beater of claim 9, wherein the angle between the lower segments (8c, 8f; 10c, 10f) and the center line (16) is about 22 to 25°.

11. The rotary beater of any of the previous claims, wherein the angle (δ) is between 0° and 30°.

12. The rotary beater of any of the previous claims, wherein the angle (δ) is about 10°.

13. A device for using the rotary beater as described in any one of the preceding claims.
